# EUROPÄISCHE PATENTSCHRIFT

(11) **EP 2 481 289 B1**
(45) Veröffentlichungstag und Bekanntmachung des Hinweises auf die Patenterteilung: **23.07.2014**
(21) Anmeldenummer: 11000742.4
(22) Anmeldetag: 31.01.2011
(51) Int. Cl.: A21C 1/06, A21C 1/10, A21C 1/14, B01F 3/12

(54) **Verfahren zum Herstellen eines Backteiges**
Method for manufacturing a batter
Procédé de fabrication d'une pâte de boulangerie

(43) Veröffentlichungstag der Anmeldung: 01.08.2012
(73) Patentinhaber: HB-Feinmechanik GmbH & Co.KG, 94526 Metten (DE)
(72) Erfinder: Endrass, Bonifaz, 94239 Gotteszell (DE); Lösche, Klaus, 27580 Bremerhaven (DE); Stukenborg, Florian, 85354 Freising (DE); von Bargen, Markus, 27574 Bremerhaven (DE); Fehner, Dennis, 28832 Achim (DE); Zeh, Paul Reiner, 82166 Gräfelfing (DE)
(74) Vertreter: Wunderlich, Rainer

(56) Entgegenhaltungen:
- EP-A1- 0 919 127
- DE-A1- 10 339 352
- DE-A1- 19 821 516
- DE-C- 602 996
- GB-A- 880 182

## Beschreibung

Die Erfindung betrifft ein Verfahren zum Herstellen eines Backteiges mittels eines Extruders.

Die Herstellung von Toastbrotteig als einen typischen Backteig erfolgt üblicherweise in einem diskontinuierlichen Batchprozess. Dabei wird der Teig zunächst in großen Behältern geknetet. Anschließend erfolgt ein Portionieren mittels Wägeeinrichtungen, wobei die Teigportionen nach einer Weiterverarbeitung mit einem Kugelrundwirker in einem Vorgärschrank zur weiteren Ausbildung des Klebergerüstes und der Porenstruktur ruhen. Anschließend wird der Teig vor dem Backen ausgerollt. Um dem sich dabei einstellenden Längungseffekt der Porenstruktur im Teig entgegenzuwirken, wird die Teigportion für eine Toastbrot-Backform in vier Teile unterteilt, gerollt und in der gerollten Form in die Backform zum Backen eingebracht. Trotz dieser sogenannten 4-pieces-Methode ist im Endprodukt eine ungleichmäßige Porenstruktur als sogenannte Schattenbildung wahrnehmbar.

Ein dem Oberbegriff des Anspruch 1 entsprechendes Verfahren zur Herstellung von Teig geht aus der EP 0 919 127 B1 hervor. Bei dieser bekannten Vorrichtung wird zur Herstellung von Teigprodukten das Mehl getrennt von einer Flüssigkomponente in den Extruder eingeleitet. Im Verlauf des Extruders wird der Teig geknetet und kann als fertiger Nudelteig ausgetragen werden.

Für die Herstellung von Nudelteig wird insgesamt eine möglichst dichte, gasfreie Teigmasse angestrebt, um so feste und auch nach dem Kochen "bissfeste" Nudeln zu erhalten. Ein eingearbeitetes Gas wird über Vakuumsabschnitte entfernt.

Hingegen wird bei der Herstellung eines Backteiges, insbesondere eines Toastbrotbackteiges, ein Teig angestrebt, welcher in einem anschließenden Backprozess zu einer Porenstruktur des Backproduktes führt.

Aus der DE 602 996 C geht eine Vorrichtung und ein Verfahren hervor, bei welchem Mehl als ein stetiger Mehlregen durch einen Flüssigkeitsschleier rieselt und einem Extruder zugeführt wird, wodurch ein besonders gleichmäßiges Mehlwassergemisch erzeugt werden soll.

Die DE 198 21 516 A1 lehrt die Anordnung einer Durchtränkungsvorrichtung vor einem Extruder. Die Durchtränkungsvorrichtung weist eine rotierende Welle mit Schaufeln auf, wobei eine seitliche Zuleitung von Flüssigkeit erfolgt.

Weitere Extruder mit Flüssigkeitszuführungen sind aus der GB 880 182 A und der DE 103 39 352 A1 bekannt.

Der Erfindung liegt die **Aufgabe** zugrunde, ein Verfahren anzugeben, mit welchen in effizienter Weise ein Backteig für ein Backprodukt erreichbar ist, wobei eine gezielte Porenstruktur des Backproduktes einstellbar ist.

Nach der Erfindung wird die Aufgabe durch ein Verfahren mit den Merkmalen des Anspruchs 1 gelöst. Bevorzugte Ausbildungen der Erfindung sind in den abhängigen Ansprüchen angegeben.

Nach der Erfindung ist ein Verfahren entsprechend Anspruch 1 zum Herstellen eines Backteiges mittels eines Extruders vorgesehen, wobei
- bei Einleitung in den Extruder pulverförmiger Teiggrundstoff, insbesondere Getreidemehl, mit einer Zubreitungsflüssigkeit benetzt wird, welches mittels einer Düseneinrichtung auf den Teiggrundstoff mit einem Druck gesprüht wird, so dass ein Vorteig gebildet wird,
- der Vorteig in dem Extruder unter gezielter Einmischung eines O₂-haltigen Gases mittels Knetorganen geknetet wird,
- aus dem gekneteten Teig entlang mindestens eines Entgasungsabschnittes O₂-haltiges Gas abgezogen wird, und
- der Teig durch ein Formwerkzeug aus dem Extruder ausgetragen wird.

Gemäß einem ersten Aspekt wird das Verfahren kontinuierlich mit einem Extruder durchgeführt, wobei jedoch bereits zu Beginn des Verfahrens ein Vorteig durch Besprühen mit einer Zubereitungsflüssigkeit unter Druck aus einer Düseneinrichtung hergestellt wird. Diese Bereitung des Vorteiges erfolgt unmittelbar vor dem Eintritt in den Extruder oder unmittelbar am Anfangsbereich des Extruders, insbesondere bevor ein Kneten des Teiges durchgeführt wird.

Somit liegt bereits zu Beginn des Extruders ein erstes Teigvorprodukt vor, so dass bei der nachfolgenden Verarbeitung zum Fertigteig durch den Extruder eine geringere mechanische Energie aufgebracht werden muss. Hierdurch wird die thermische Belastung des wärmeempfindlichen Teiges deutlich vermindert. Insgesamt kann auch der Extruder mit einer geringeren Länge und damit kompakter und insgesamt wirtschaftlicher ausgebildet werden. Zudem kann bei dem Vorteig, bei welchem bereits eine Hydratation und damit eine Ausbildung des Klebergerüstes durch die Proteine im Teiggrundstoff ausgebildet ist, eine bessere Gasaufnahme erfolgen.

Der Anteil des O₂-haltigen Gases, insbesondere Luft, innerhalb des Teiges wird dann im Verlauf der Förderung des Teiges durch den Extruder vom Eintritt zum Ausgang in zumindest einer Entgasungsstation definiert eingestellt. Dies kann insbesondere durch eine entsprechende Druckeinstellung erfolgen.

Dabei wird zu Beginn ein hoher Sauerstoffgehalt eingestellt. Dieser dient einer schnellen und guten Ausbildung des Klebergerüstes im Teig aufgrund von Oxidationsvorgängen. Die Sauerstoffzudüsung wird so eingestellt, dass im Teiggrundstoff ein gelöster Sauerstoffgehalt von 5 bis 300ppm, insbesondere zwischen 10 und 30ppm, erreicht wird.

Im Verlauf des Extruders erfolgt nach Ausbildung des Klebergerüstes eine gezielte Reduktion des Sauerstoffanteiles von 20% bis 30%. Hierdurch wird die weitere Reaktion zum Ausbilden des Klebergerüstes weitgehend unterbunden. Zudem bewirkt die Sauerstoffreduktion eine Änderung von einer elastischen Eigenschaft des Teiges hin zu einer plastischen Eigenschaft. Dies ist insbesondere für ein leichtes Ausextrudieren des Teiges und ein exaktes Portionieren vorteilhaft.

Ein Aspekt der Erfindung liegt also darin, durch eine gezielte Steuerung des Sauerstoffanteiles im Teig die plastischen Teigeigenschaften einzustellen, welche maßgeblich für die Maschinenfähigkeit des Teiges sind.

Der insgesamt so fertig gestellte Teig wird am Ausgang des Extruders durch ein Formwerkzeug ausextrudiert, so dass ein Fertigteig vorliegt, welcher unmittelbar oder nach einer kurzen Ruhezeit einem Backprozess zugeführt werden kann. Insbesondere kann am Ausgang des Extruders am Formwerkzeug eine Abzugseinrichtung zum kontinuierlichen Abziehen des Teiges oder eine Schneideinrichtung vorgesehen sein, durch welche der plastische, mit einer gleichmäßigen Dichte versehenen Teig bei Austritt portioniert wird.

Als Teiggrundstoff wird insbesondere ein Getreidemehl oder eine andere pulverförmige Masse, etwa Grieß, vorgesehen. Als Zubereitungsflüssigkeit dient insbesondere Wasser, welches gegebenenfalls mit Salz, Zucker, Ölen oder weiteren Additiven angereichert sein kann. Die Additive können auch getrennt zudosiert werden. In besonders vorteilhafter Weise kann zur Verbesserung und exakteren Steuerung der Oxidationsvorgänge beim Ausbilden des Klebergerüstes Ascorbinsäure, vorzugsweise mit 10 bis 100ppm Anteil im Teig, zugesetzt werden. Im Verlauf des Extruders kann weitere Zubereitungsflüssigkeit oder eine andere Flüssigkeitskomponente zur geschmacklichen oder farblichen Anreicherung des Teiges dem Verfahrensraum im Extruder zugeführt werden.

Eine bevorzugte Ausführungsform des erfindungsgemäßen Verfahrens besteht darin, dass das O₂-haltige Gas bei einem ersten Druck in den Extruder eingeleitet wird, welcher über dem Umgebungsdruck liegt. Vorteilhaft ist es weiterhin, dass zum Einmischen des Gases in einem Knetabschnitt des Extruders der Vorteig bei einem zweiten Druck geknetet wird, welcher unterschiedlich insbesondere geringer, ist als der erste Druck. Als O₂-haltiges Gas kann insbesondere Umgebungsluft oder ein spezielles Verarbeitungsgas, welches einen definierten Anteil Sauerstoff enthält, verwendet werden. Durch fingerartige, radial an den Extruderwellen vorstehende Knetorgane wird der bereits klebrige Vorteig geknetet und gleichzeitig in Richtung zum Ausgang des Extruders gefördert. Dabei wird zusätzliches Gas gleichmäßig in den Teig eingearbeitet. Durch eine Verringerung des Druckes in dem Knetabschnitt gegenüber dem Druck, bei welchem der Vorteig hergestellt wurde, wird eine Ausdehnung und damit Vergrößerung der Gasblasen innerhalb des Teiges bewirkt. Die so vergrößerten Gasblasen können in dem Knetabschnitt leichter zerteilt werden, so dass sich insgesamt eine noch bessere Gasverteilung im Teig einstellt, wodurch die Oxidationsprozesse gefördert werden. In bestimmten Fällen kann es auch zweckmäßig sein, in einzelnen Knetabschnitten eine Druckerhöhung vorzusehen. Eine abschnittsweise Druckeinstellung innerhalb des Verfahrensraumes des Extruders ist durch radial vorstehende Gehäusewände und/oder geringe Förderwendelsteigungen möglich. So werden Staubereiche geschaffen, welche nur einen definierten Durchgang von Teig an den Extruderwellen gewähren. Insbesondere der Eingangs- oder Eintrittsbereich ist als Druckkammer ausgebildet, so dass hierin ein Überdruck von 05, bis 5 bar gegenüber dem Umgebungsdruck einstellbar ist.

Eine besonders gute, feine Gasverteilung ergibt sich dadurch, dass der Vorteig im Verlauf des Extruders mehrfach in verschiedenen Knetabschnitten geknetet wird, wobei zwischen den Knetabschnitten zumindest ein Druckabschnitt mit erhöhtem Druck angeordnet ist. Insbesondere sind zumindest zwei Knetabschnitte vorgesehen, bei welcher ein Kneten des Teiges bei einem geringeren Druck erfolgt, so dass die dabei vergrößerten Gasporen im Teig weiter verkleinert und zerteilt werden können. Durch einen zwischen den beiden Knetabschnitten angeordneten Druckabschnitt, bei welchem ein im Vergleich zu den Knetabschnitten höherer Druck eingestellt wird, ergibt sich durch die Reduktion des Gasvolumens eine Stabilisierung der Porenstruktur. In diesem Druckabschnitt kann grundsätzlich auch ein Kneten mittels Knetorganen erfolgen. Jedoch ist bevorzugt, dass in diesem Abschnitt lediglich ein Fördern durch die Extruderwellen erfolgt. Im nachfolgenden Knetabschnitt mit einem abermaligen geringeren Druck und damit einer so eingestellten Volumenvergrößerung der Gasporen wird eine weitere feine Verteilung des Gases im Teig bewirkt. Eine gute Verteilung des O₂-haltigen Gases sorgt für eine gleichmäßige, schnelle Oxidation. Nach einem Entziehen des Sauerstoffes verbleibt im Teig zudem eine Vielzahl von Glasbasenkernen. Bei einer Gärung des Teiges freigesetztes CO₂ diffundiert maßgeblich in diese Gasblasenkerne, so dass eine gezielte Einstellung der Porenstruktur des Backproduktes erreicht wird. Diese kann bei vielen Gasblasenkernen sehr feinporig oder bei weniger Gasblasenkernen grobporig sein, wie es etwa bei Ciabattateigen gewünscht ist.

Eine abschnittsweise Erhöhung des Druckes innerhalb des Extrudergehäuses zur Teigbearbeitung kann durch eine entsprechende Gestaltung der Steigung der schraubenförmigen Extruderwellensegmente in diesem Abschnitt erfolgen. Bei einer kleineren Schneckensteigung wird die Fördergeschwindigkeit verringert, wobei sich bei entsprechender Ausgestaltung des nachfolgenden Extruderwellensegmentes ein Druckanstieg ergibt. Besonders bevorzugt ist es, dass zur Druckerhöhung ein Druckfluid in den Extruder eingeleitet wird. Dies kann insbesondere ein Gas, etwa Umgebungsluft sein, welches über mindestens eine Zuführleitung unter Druck in einen mittleren Abschnitt des Extruders zugeführt wird.

Grundsätzlich kann ein Extruder mit mehreren Extruderwellen verwendet werden, welche insbesondere gleichlaufend angetrieben sind. Zur Bearbeitung des Teiges hat es sich jedoch als besonders zweckmäßig herausgestellt, dass der Extruder zwei Extruderwellen aufweist, welche gegenläufig angetrieben werden. Bei einem sogenannten gegenläufigen Extruder mit zwei Extruderwellen erfolgt eine sehr schonende Aufbereitung und Förderung des Teiges innerhalb des Extruders. Hierdurch wird eine übermäßige Einbringung von mechanischer Energie und damit von Wärme in den Teig verhindert. Eine Überhitzung des Teiges führt zu einer Schädigung der Proteinmoleküle, so dass sich dann ein gewünschtes Klebergerüst nicht mehr einstellen würde.

Dabei ist es besonders vorteilhaft, dass ein Gehäuse und/oder die Extruderwellen temperiert, insbesondere gekühlt werden. Hierzu können das Gehäuse beziehungsweise die Extruderwellen mit Kühlkanälen durchzogen sein, durch welche ein Kühlfluid geleitet wird. Insbesondere ist es nach der Erfindung vorgesehen, dass der Teig nicht über eine Temperatur von 30°C erwärmt wird. Grundsätzlich ist es jedoch auch denkbar, durch die entsprechenden Kanäle ein Heizfluid zu leiten, sofern etwa in bestimmten Abschnitten eine definierte Temperaturerhöhung gewünscht ist.

Zur Herstellung des Vorteiges ist es erfindungsgemäß, dass das Aufsprühen der Zubereitungsflüssigkeit auf den Teiggrundstoff mit einem Hochdruck, von 10 bar bis 100 bar, erfolgt, wobei eine Hydratation von Proteinen des Teiggrundstoffes erfolgt. Die Hydratation ist dabei ein wesentlicher Schritt zur Ausbildung des Klebergerüstes. Durch das Aufsprühen der Zubereitungsflüssigkeit unter einem hohen Druck von vorzugsweise 30 bis 80 bar erfolgt nicht nur eine Befeuchtung sondern auch eine intensive mechanische Einwirkung, welche zum Bilden des Teiges vorteilhaft ist. Da diese mechanische Einwirkung ausschließlich über die Flüssigkeit erfolgt, ergibt sich hier keine wesentliche Temperaturbelastung des Vorteiges, so dass das Verfahren insgesamt schonend und sehr schnell durchgeführt werden kann. Es können insgesamt ein oder mehrere Düsen im Eingangsbereich des Extruders vorgesehen sein, so dass eine gezielte Einwirkung zum Bilden des Vorteiges erfolgt.

Zum Erzeugen einer gezielten Porenstruktur des Fertigteiges ist vorgesehen, dass vor einem Ausgang des Extruders in einem Unterdruckabschnitt ein Unterdruck eingestellt wird, welcher geringer als der Umgebungsdruck ist. Dabei ist insbesondere vorgesehen, dass zwischen dem Unterdruckabschnitt und dem Ausgang ein Kneten in einem abschließenden Knetabschnitt durchgeführt wird. Durch ein solches Kneten in einem Unterdruckabschnitt, welcher geringer als der Umgebungsdruck, also der Raum- oder Atmosphärendruck von ca. 1000 mbar, ist, wird O₂-haltiges Gas entfernt und die gewünscht plastische, dichte Teigmasse eingestellt. Bei Austritt aus dem Extruder verbleiben aber Gasblasenkerne im Teig. Bei einem anschließenden Gärungs- und Backprozess kann so etwa eine sehr feinporige Struktur im fertigen Backprodukt erreicht werden. Dies ist insbesondere für Brotteige und im speziellen für Toastbrotteige ein wesentliches Qualitätsmerkmal.

Während bei der herkömmlichen Herstellung von Toastbrotteig dieser noch in speziellen Verfahrensschritten gewalzt, gerollt und in der Regel in vier Teilen in eine Toastbrot-Backform eingegeben werden muss, kann bei dem erfindungsgemäßen Verfahren der fertige Teig unmittelbar verarbeitet werden. Insbesondere ist nach der Erfindung vorgesehen, dass der Teig aus dem Extruder direkt in eine Form ausextrudiert wird und durch eine Schneideinrichtung portioniert wird. Das erfindungsgemäße Verfahren ist für Brotteige, insbesondere Toastbrotteige, aber auch für alle anderen Arten von Backteigen sehr gut geeignet, wie Pizza-, Feingebäck-, Blätter- oder Plunderteige. Alternativ kann der Teig auch als Teigband ausgeformt und einer Laminieranlage zugeführt werden.

Eine Vorrichtung zum Herstellen eines Backteiges ist dadurch gekennzeichnet, dass an einem Eingangsbereich des Extruders eine Düseneinrichtung vorgesehen ist, mit welcher zum Bilden eines Vorteiges eine Zubereitungsflüssigkeit unter Druck auf einen Teiggrundstoff sprühbar ist. Mit dieser Vorrichtung kann insbesondere das vorausgehend beschriebene Verfahren mit den genannten Vorteilen durchgeführt werden.

Eine vorteilhafte Ausgestaltung der Vorrichtung besteht darin, dass mehrere Knetabschnitte mit Knetorganen vorgesehen sind, wobei zwischen den

Knetabschnitten zumindest ein Druckabschnitt mit einem erhöhten Druck angeordnet ist. Durch eine entsprechend geringere Druckeinstellung in einem zumindest vorgelagerten Knetabschnitt und einem nachgelagerten Knetabschnitt kann, wie vorausgehend beschrieben, eine gezielte Verteilung des Gases im Teig erreicht werden.

Zur Druckeinstellung ist es besonders bevorzugt, dass zu dem Druckabschnitt eine Zuleitung ausgebildet ist, über welche ein Druckfluid zur abschnittsweisen Druckerhöhung innerhalb des Extruders einleitbar ist.

## Patentansprüche

1. Verfahren zum Herstellen eines Backteiges mittels eines Extruders, wobei
- bei Einleitung in den Extruder ein pulverförmiger Teiggrundstoff, insbesondere Getreidemehl, mit einer Zubereitungsflüssigkeit benetzt wird,
- im Extruder ein Teig geknetet wird und
- der Teig durch ein Formwerkzeug aus dem Extruder ausgetragen wird, **dadurch gekennzeichnet,**
- **dass** die Zubereitungsflüssigkeit bei Einleitung unmittelbar vor einem Eintritt und Kneten im Extruder mittels einer Düseneinrichtung auf den Teiggrundstoff mit einem Hochdruck von 10 bar bis 100 bar zur Hydration von Proteinen des Teiggrundstoffes gesprüht wird, wobei von den Proteinen des Teiggrundstoffes ein Klebergerüst ausgebildet und ein Vorteig gebildet wird,
- **dass** der Vorteig in dem Extruder unter gezielter Einmischung eines O₂-haltigen Gases mittels Knetorganen geknetet wird, wobei im Teiggrundstoff ein gelöster Sauerstoffanteil von 5 bis 300 ppm eingestellt wird, und
- **dass** aus dem gekneteten Teig entlang mindestens eines Entgasungsabschnittes O₂-haltiges Gas abgezogen wird und der Sauerstoffanteil um 20% bis 30% reduziert wird.

2. Verfahren nach Anspruch 1,
**dadurch gekennzeichnet,**
**dass** das O₂-haltige Gas bei einem ersten Druck in den Extruder eingeleitet wird, welcher über dem Umgebungsdruck liegt.

3. Verfahren nach Anspruch 2,
**dadurch gekennzeichnet,**
**dass** zum Einmischen des Gases in einem Knetabschnitt des Extruders der Vorteig bei einem zweiten Druck geknetet wird, welcher unterschiedlich, insbesondere geringer, ist als der erste Druck.

4. Verfahren nach einem der Ansprüche 1 bis 3,
**dadurch gekennzeichnet,**
**dass** der Vorteig im Verlauf des Extruders mehrfach in verschiedenen Knetabschnitten geknetet wird, wobei zwischen den Knetabschnitten zumindest ein Druckabschnitt mit erhöhtem Druck angeordnet ist.

5. Verfahren nach einem der Ansprüche 1 bis 4,
**dadurch gekennzeichnet,**
**dass** der Extruder zwei Extruderwellen aufweist, welche gegenläufig angetrieben werden.

6. Verfahren nach einem der Ansprüche 1 bis 5,
**dadurch gekennzeichnet,**
**dass** ein Gehäuse und/oder die Extruderwellen temperiert, insbesondere gekühlt werden.

7. Verfahren nach einem der Ansprüche 1 bis 6,
**dadurch gekennzeichnet,**
**dass** das Aufsprühen der Zubereitungsflüssigkeit auf den Teiggrundstoff bei einem Druck von 30 bar bis 80 bar erfolgt, wobei eine Hydratation von Proteinen des Teiggrundstoffes erfolgt.

8. Verfahren nach einem der Ansprüche 1 bis 7,
**dadurch gekennzeichnet,**
**dass** vor einem Ausgang des Extruders in einem Unterdruckabschnitt ein Unterdruck eingestellt wird, welcher geringer als der Umgebungsdruck ist.

9. Verfahren nach Anspruch 8,
**dadurch gekennzeichnet,**
**dass** zwischen dem Unterdruckabschnitt und dem Ausgang ein Kneten in einem abschließenden Knetabschnitt durchgeführt wird.

10. Verfahren nach einem der Ansprüche 1 bis 9,
**dadurch gekennzeichnet,**
**dass** der Teig unmittelbar nach Austritt aus dem Extruder portioniert wird.

11. Verfahren nach einem der Ansprüche 1 bis 10,
**dadurch gekennzeichnet,**
**dass** der Teig aus dem Extruder direkt in eine Backform ausextrudiert wird oder als Teigband aufgeformt und einer Laminieranlage oder Teigbandanlage zugeführt wird.

## Claims

1. Method for producing a baking dough by means of an extruder, wherein
- a powdery basic dough material, in particular cereal flour, is introduced into the extruder and wetted with a preparation liquid,
- in the extruder a dough is kneaded and
- the dough is discharged from the extruder through a shaping tool, **characterised in that**
- upon introduction immediately before entry and kneading in the extruder the preparation liquid is sprayed by means of a nozzle means onto the basic dough material at a high pressure of 10 bar to 100 bar for the hydration of proteins of the basic dough material, wherein a gluten network is developed by the proteins of the basic dough material and a starter dough is formed,
- the starter dough is kneaded in the extruder by means of kneading elements whilst specifically admixing a gas containing O₂, wherein a dissolved oxygen proportion of 5 to 300 ppm is set in the basic dough material, and
- from the kneaded dough, gas containing O₂ is drawn off along at least one degassing section and the oxygen proportion is reduced by 20% to 30%.

2. Method according to claim 1,
**characterised in that**
the gas containing O₂ is introduced into the extruder at a first pressure lying above ambient pressure.

3. Method according to claim 2,
**characterised in that**
for the admixture of the gas in a kneading section of the extruder the starter dough is kneaded at a second pressure which is different from, in particular lower than the first pressure.

4. Method according to anyone of the claims 1 to 3,
**characterised in that**
in the course of the extruder the starter dough is kneaded repeatedly in different kneading sections, wherein in-between the kneading sections at least one pressure section with increased pressure is arranged.

5. Method according to anyone of the claims 1 to 4,
**characterised in that**
the extruder has two extruder shafts that are driven in opposite directions.

6. Method according to anyone of the claims 1 to 5,
**characterised in that**
a housing and/or the extruder shafts are tempered, in particular cooled.

7. Method according to anyone of the claims 1 to 6,
**characterised in that**
the spraying of the preparation liquid onto the basic dough material is effected at a pressure of 30 bar to 80 bar, wherein a hydration of proteins of the basic dough material takes place.

8. Method according to anyone of the claims 1 to 7,
**characterised in that**
in a low-pressure section before an outlet of the extruder a low pressure is set which is lower than ambient pressure.

9. Method according to claim 8,
**characterised in that**
between the low-pressure section and the outlet a kneading is carried out in a terminal kneading section.

10. Method according to anyone of the claims 1 to 9,
**characterised in that**
the dough is portioned immediately after exiting from the extruder.

11. Method according to anyone of the claims 1 to 10,
**characterised in that**
the dough is extruded from the extruder directly into a baking mold or shaped as a dough band and supplied to a lamination facility or dough band facility.

## Revendications

1. Procédé de fabrication d'une pâte de boulangerie à l'aide d'une extrudeuse, selon lequel :
- lors de l'introduction dans l'extrudeuse, une pâte de base sous forme de poudre, en particulier de la farine de céréales, est mouillée avec une préparation liquide,
- une pâte est pétrie dans l'extrudeuse, et
- la pâte est extraite de l'extrudeuse au moyen d'un outil de moulage, **caractérisé :**
- **en ce que**, lors de l'introduction, immédiatement avant l'entrée et le pétrissage dans l'extrudeuse, la préparation liquide est projetée par pulvérisation, au moyen d'un dispositif de buse, sur la pâte de base à une haute pression comprise entre 10 bars et 100 bars, en vue de l'hydratation de protéines de la pâte de base, une structure agglutinante étant alors constituée à partir des protéines de la pâte de base et une pâte préliminaire étant ainsi formée,
- **en ce qu'**au moyen d'un organe de pétrissage, la pâte préliminaire est pétrie dans l'extrudeuse en présence d'un mélange ciblé d'un gaz contenant de l'oxygène, une teneur en oxygène dissous étant réglée entre 5 et 300 ppm dans la pâte de base, et
- **en ce que** du gaz contenant de l'oxygène est évacué de la pâte pétrie le long d'au moins un tronçon de dégazage, et la teneur en oxygène est réduite de 20% à 30%.

2. Procédé selon la revendication 1,
**caractérisé :**
**en ce que** le gaz contenant de l'oxygène est introduit dans l'extrudeuse à une première pression, qui se situe au-dessus de la pression ambiante.

3. Procédé selon la revendication 2,
**caractérisé :**
**en ce que**, pour le mélange du gaz dans une section de pétrissage de l'extrudeuse, la pâte préliminaire est pétrie à une deuxième pression, qui est différente de la première pression, plus particulièrement plus faible que celle-ci.

4. Procédé selon une des revendications 1 à 3,
**caractérisé :**
**en ce qu'**au cours du fonctionnement de l'extrudeuse, la pâte préliminaire est pétrie plusieurs fois dans des sections de pétrissage distinctes, au moins une section de compression à une pression plus élevée étant disposée entre les sections de pétrissage.

5. Procédé selon une des revendications 1 à 4,
**caractérisé :**
**en ce que** l'extrudeuse comprend deux arbres d'extrudeuse, qui sont entraînés dans des sens contraires.

6. Procédé selon une des revendications 1 à 5,
**caractérisé :**
**en ce qu'**un boîtier et/ou les arbres d'extrudeuse sont tempérés, et, plus particulièrement, refroidis.

7. Procédé selon une des revendications 1 à 6,
**caractérisé :**
**en ce que** la projection par pulvérisation de la préparation liquide sur la pâte de base a lieu à une pression comprise entre 30 bars et 80 bars, avec pour résultat une hydratation des protéines de la pâte de base.

8. Procédé selon une des revendications 1 à 7,
**caractérisé :**
**en ce qu'**avant une sortie de l'extrudeuse, une sous-pression, qui est plus faible que la pression ambiante, est réglée dans une section de sous-pression.

9. Procédé selon la revendication 8,
**caractérisé :**
**en ce qu'**entre la section de sous-pression et la sortie, un pétrissage est effectué dans une section de pétrissage finale.

10. Procédé selon une des revendications 1 à 9,
**caractérisé :**
**en ce que** la pâte est divisée en portions immédiatement après la sortie de l'extrudeuse.

11. Procédé selon une des revendications 1 à 10,
**caractérisé :**
**en ce qu'**à la sortie de l'extrudeuse, la pâte est évacuée de l'extrudeuse directement dans un moule à pâtisserie, ou bien est mise sous la forme d'une bande de pâte et est acheminée jusqu'à une chaîne de laminage ou une chaîne de traitement de bande de pâte.
